# EUROPEAN PATENT SPECIFICATION

(11) **EP 2 850 784 B1**
(45) Date of publication and mention of the grant of the patent: **16.06.2021**
(21) Application number: 13791063.4
(22) Date of filing: 30.04.2013
(51) Int. Cl.: H04L 12/403, H04L 29/08, G06F 13/38, H04L 12/40, G05B 19/042

(54) **CONTROL OF FUNCTIONS IN MOTOR VEHICLES**
STEUERUNG VON FUNKTIONEN IN KRAFTFAHRZEUGEN
COMMANDE DE FONCTIONS DANS DES VÉHICULES AUTOMOBILES

(30) Priority: 15.05.2012 SE 1250497
(43) Date of publication of application: 25.03.2015
(73) Proprietor: Scania CV AB, 151 87 Södertälje (SE)
(72) Inventor: ROOS, Per, S-153 36 Järna (SE); BERGQVIST, Ola, S-131 40 Nacka (SE)
(74) Representative: Scania CV AB
(86) International application number: PCT/SE2013/050476
(87) International publication number: WO 2013/172766

(56) References cited:
- US-A1- 2003 070 019
- US-A1- 2004 003 153
- US-A1- 2006 224 776
- US-A1- 2009 083 397
- US-A1- 2009 125 656

## Description

The present invention generally concerns the control of functions in motor vehicles.

In modern vehicles, numerous functions and control systems are actuated by means of electronic switches and knobs. Communication buses are currently often used both to sense the settings of actuating devices and to transfer signals from transmitters and sensors to various monitoring systems in order to streamline the cable runs to actuating devices. In addition, communication buses are normally used to affect settings and adjustments of switch devices and actuators for performing the functions indicated by an operator by means of settings of the actuating devices.

US 2004/003153 describes a data bus comprising slave nodes executing functions based on addressed command telegrams of an electronic main control unit which is also connected to said data bus. The command telegrams contain an identification field for addressing the commands whereby a reduced number of identification data is provided for said identification field. All functions which can be executed by the form of slave nodes on the data bus are respectively associated with at least one function number. Each slave node comprises a first non-volatile memory area, wherein the function numbers of the functions, which can be executed by a respective slave node are securely stored. Each slave node comprises a second programmable memory area, wherein identification information provided for the identification field can be stored associated with each function number stored by means of a special command telegram from the electronic main control unit to each function number stored in the first memory area. US 2006/224776 describes an auto-configured LIN bus system comprising a plurality of modules linked to a LIN bus along which electronic data or instructions can be sent to and from each said module.

### PROBLEMS ASSOCIATED WITH THE PRIOR ART

The aforementioned solution is based on the fact that all the nodes are identical, and that a given location along the bus is associated with a given function. This approach is thus unable to handle a situation in which the nodes differ from one another, and in which there is a desire to effectuate a given function via a given node regardless of where said node is located in the bus.

### SUMMARY OF THE INVENTION

The invention is carried out as defined in the appended claims, describing a system as defined in claim 1, a method as defined in claim 4, a computer program as defined in claim 8 and a computer-readable medium as defined in claim 9.

The object of the present invention is consequently to provide a solution that overcomes the prior art problems and thereby achieves vehicle function control with increased flexibility and efficiency.

### BRIEF DESCRIPTION OF THE DRAWINGS

The present invention will now be explained in greater detail by means of embodiments, which are described as examples, and with reference to the accompanying drawings.
- Figure 1: shows a schematic diagram of a proposed system, and
- Figures 2-3: show flow diagrams that illustrate the general method according to the invention.

### DESCRIPTION OF EMBODIMENTS OF THE INVENTION

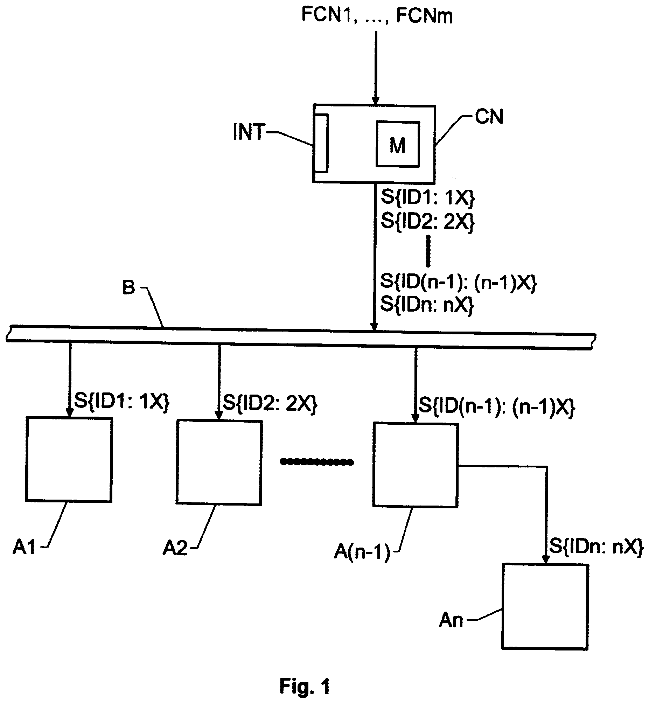

We refer by way of introduction to Figure 1, which shows a system for controlling functions in a motor vehicle. The proposed system comprises a central node CN and a set of actuators A1, ..., An, which are configured so as to be controlled from the central node CN for the purpose of performing various functions in the vehicle. The actuators A1, ..., An are communicatively connected with the central node CN via a bus connection B.

The central node CN is configured so as to transmit signals S on the bus connection B. The signals S contain at least one identity datum ID1,..., IDn, which identifies at least one of the actuators A1, ..., An. The signals S further contain control data indicating a setting 1X, ..., nX of said at least one actuator(s) A1, ..., An. For example, a first signal S{ID1: 1X} can indicate that a first actuator A1 is to adjust a first switch device to the value X. In corresponding fashion, a second signal S{ID2: 2X} can indicate that a second actuator A2 is to adjust a second switch device to the value 2X, an (n-1):th signal S{ID(n-1): (n-1)X} indicates that an (n-1):th actuator (n-1) is to adjust a second switch device to the value (n-1)X, and an nth signal S{IDn: nX} indicates that an nth actuator is to adjust an nth switch device to the value nX.

To be able to perform the desired/ordered functions, each and every one of the actuators A1, ..., An is configured so as to receive the signals S via the bus connection B. Each and every one of the actuators A1, ..., An is further configured so as to adjust, on the basis of the signals S, a respective setting, so that at least one respective ordered function FCN1, ..., FCNm can be performed. Specifically, each actuator A1, ..., An is configured so as to perform a set function (i.e. a function that is defined in advance, for example during manufacture). Furthermore, each actuator A1, ..., An is associated with a respective predefined identity datum ID1,..., IDn that uniquely identifies the actuator within the vehicle (i.e. each actuator has a predefined and immutable identity, which it has been assigned, for example, during manufacture).

During the manufacture of the actuators, it is not necessary to ensure that the identity space from which the identity data of the actuators is infinitely large, but rather only to ensure that the identity space is large enough to make the likelihood of an identity overlap within a given vehicle extremely low. If an identity overlap should occur in connection with the assembly, repair or renovation of a given vehicle, one of the affected actuators is simply replaced with an alternative actuator that is associated with an identity that does not overlap an identity already present in the vehicle.

The bus connection B is expandable, so that a second actuator An can be connected to a first actuator A(n-1) that is already connected to the central node via the bus connection B. After the connection, the second actuator An shares the connection to the bus connection B with the first actuator A(n-1), so that the second actuator An can be controlled via signals S that are communicated via the first actuator A(n-1).

According to a further embodiment of the invention, the central node CN is configured so as to receive at least one control command that indicates at least one ordered function FCN1, ..., FCNm. The control command can thus derive, for example, from a setting of an actuating device (keypad key, button, lever etc.) on the vehicle instrument panel. The central node CN is configured so as to generate one or a plurality of signals S based on said control command(s).

The central node CN is configured so as to implement a logic description of the relationship between the functions FCN1, ..., FCNm and the signals S. The logic description is advantageously modifiable via a communication interface INT in the central node CN. One can thereby reprogram the mode of action of the central node CN as needed, for example in connection with an upgrade of the vehicle that involves the addition, replacement and/or elimination of one or a plurality of actuators.

The central node CN suitably comprises a processor/computer that is controlled so as to function according to the foregoing by means of a computer program stored in a memory unit M. The memory unit M can in turn either be contained in the process/computer or be communicatively connected thereto.

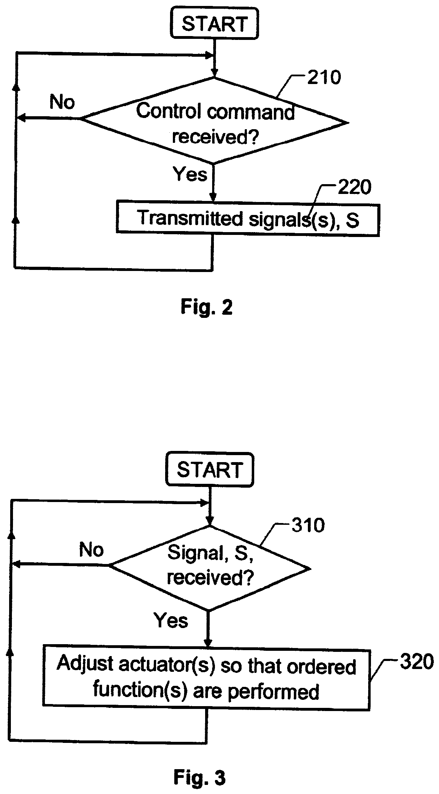

In order to provide a summary, the general method according to the invention will now be described with reference to the flow diagrams in Figures 2 and 3. Figure 2 schematically illustrates the method implemented in the central node CN, while Figure 3 clarifies the method that is carried out in each actuator.

In a first step 210 in the procedure according to Figure 2, a check is performed as to whether a control command has been received in the central node CN. If such is the case, a step 220 follows, and otherwise the procedure loops back and stays in step 210. In step 220 the central node CN transmits one or a plurality of signals S adapted so as effect the execution of the function(s) specified by the control command upon reception in one or a plurality of actuators. The procedure is subsequently returned to step 210.

In a first step 310 in the procedure according to Figure 3, a check is performed made as to whether a signal S has been received. If such is the case, a step 320 follows, and otherwise the procedure loops back and stays in step 310. In step 320, affected actuators are adjusted in accordance with what the signal S indicates, so that the affected function(s) is/are performed. The procedure is subsequently returned to step 310.

The method steps described with reference to Figures 2 and 3 can be controlled by means of a programmed computer device. In addition, and including when the embodiments of the invention described with reference to the figures comprise a computer and processor realized in a computer, the invention extends to a computer program, particularly a computer program on or in a carrier adapted so as to implement the invention in practice. The program can be in the form of source code, object code, a code that constitutes an intermediate entity between source and object code, such as in partially compiled form, or in any other form that is at all suitable for use in implementing the process according to the invention. The carrier can be any arbitrary entity or device that is capable of carrying the program. For example, the carrier can consist of a storage medium such as a flash memory, a ROM (Read Only Memory), such as a CD (Compact Disc) or a semiconductor-ROM, EPROM (Electrically Programmable ROM), EEPROM (Erasable EPROM), or a magnetic recording medium, such as a floppy disk or hard disk. The carrier can further consist of a transferring carrier such as an electrical or optical signal, which can be conducted via an electrical or optical cable, via radio, or in some other way. When the program takes the form of a signal that can be conducted directly by a cable or other device or element, the carrier can consist of such a cable, device or element. Alternatively, the carrier can be an integrated circuit in which the program is embedded, wherein the integrated circuit is adapted so as to perform, or so as to be used in connection with the performance of, the relevant processes.

The invention is not limited to the embodiments described with reference to the figures, but rather can be varied as far as it falls within the scope of the following claims.

## Claims

1. A system for controlling functions in a motor vehicle, which system comprises:
a central node (CN), and
a set of actuators (A1, ..., An) configured so as to be controlled from the central node (CN) for the purpose of performing at least one function in the vehicle, which actuators (A1, ..., An) are communicatively connected with the central node (CN) via a bus connection (B), wherein the central node (CN) is configured so as to transmit, on the bus connection (B), signals (S) containing: at least one identity datum (ID1,..., IDn) identifying at least one of said actuators (A1, ..., An), and control data indicating a setting (1X, ..., nX) of said at least one identified actuator (A1, ..., An), wherein each and every one of said actuators (A1, ..., An) is configured so as to receive, via the bus connector (B), the signals (S) and, on the basis thereof, to adjust a respective setting so that at least one ordered function (FCN1, ..., FCNm) is performed, **characterized in that** each and every one of said actuators (A1, ..., An) is configured so as to perform a set function and each and every one of said actuators (A1, ..., An) is associated with a respective predefined identity datum (ID1,..., IDn) that uniquely identifies the actuator within the vehicle, and wherein the bus connection (B) is expandable, so that a second actuator (An) can be connected to a first actuator (A(n-1)) connected to the central node (CN) via the bus connection (B), so that, after the connection, the second actuator (An) shares the connection to the bus connection (B) with the first actuator (A(n-1)) and the second actuator (An) can be controlled by means of said signals (S) that are communicated via said first actuator (A(n-1)).

2. The system according to claim 1, wherein the central node (CN) is configured so as to:
receive at least one control command, which identifies said at least one ordered function (FCN1, ..., FCNm) and generates said signals (S) on the basis of said at least one control command.

3. The system according to claim 2, wherein the central node (CN) is configured so as to implement a logic description of a relationship between said at least one function (FCN1, ..., FCNm) and the signals (S), which logic description is modifiable via a communication interface (INT) in the central node (CN).

4. A method for controlling functions in a motor vehicle comprising a central node (CN), a set of actuators (A1, ..., An) configured so as to be controlled from the central node (CN) for the purpose of performing at least one function in the vehicle, and a bus connection (B) that communicatively connects the central node (CN) with said actuators (A1, ..., An), which method comprises:
transmission of at least one signal (S) from the central node (CN) on the bus connection (B), which signal (S) contains: at least one identity datum (ID1,..., IDn) identifying at least one of said actuators (A1, ..., An), and control data indicating a setting (1X, ..., nX) of said at least one identified actuator (A1, ..., An),
reception of said at least one signal (S) in at least one of said actuators (A1, ..., An) via the bus connection (B) and, on the basis thereof,
adjustment in said at least one of said actuators (A1, ..., An) of a respective setting so that at least one ordered function (FCN1, ..., FCNm) is performed, **characterized in that** each and every one of said actuators (A1, ..., An) is configured so as to perform a set function, and each and every one of said actuators (A1, ..., An) is associated with a respective predefined identity datum (ID1,..., IDn) that uniquely identifies the actuator within the vehicle, and the method comprising expansion of the bus connection (B) by means of:
connection of a second actuator (An) to a first actuator (A(n-1)) connected to the central node (CN) via the bus connection (B) and, after the connection,
storage, in the central node (CN), of data that link an identity datum (IDn) for the second actuator (An) with the set function of the second actuator (An) and, thereafter, communication of said signals (S) between the central node (CN) and the second actuator (An) via the first actuator (A(n-1)).

5. The method according to claim 4, which method comprises:
connection of an actuator (A1, ..., A(n-1)) to the bus connection (B), and after the connection
storage, in the central node (CN), of data that link an identity datum (ID1,..., ID(n-1)) with the set function of the actuator (A1, ..., A(n-1)) and, thereafter,
communication of said signals (S) between the central node (CN) and the actuator (A1, ..., A(n-1)) via the bus connection (B).

6. The method according to any of claims 4 or 5, which method comprises:
reception, in the central node (CN), of at least one control command that indicates said at least one ordered function (FCN1, ..., FCNm) and, on the basis of said at least one control command,
generation of said signals (S) in the central node (CN).

7. The method according to claim 6, in which method the central node (CN) is configured so as to implement a logic description of a relationship between said at least one function (FCN1, ..., FCNm) and the signals (S), and which method further comprises:
modification of the logic description via a communication interface (INT) in the central node (CN).

8. A computer program that is directly downloadable to the internal memory (M) of a computer, which program comprises software for performing the steps according to any of claims 4 to 7 when said program is run on the computer.

9. A computer-readable medium (M) with a program stored thereon, wherein the program is adapted so as to enable a computer to perform the steps according to any of claims 4 to 7.

## Patentansprüche

1. System zur Steuerung von Funktionen in einem Kraftfahrzeug, wobei das System aufweist:
einen Zentralknoten (CN), und
einen Satz Aktuatoren (A1, ..., An), die dazu eingerichtet sind, von dem Zentralknoten (CN) zum Zwecke des Ausführens wenigstens einer Funktion in dem Fahrzeug gesteuert zu werden, wobei die Aktuatoren (A1, ..., An) kommunikationsfähig mit dem Zentralknoten (CN) über eine Busverbindung (B) verbunden sind,
wobei der Zentralknoten (CN) dazu eingerichtet ist, auf der Busverbindung (B) Signale (S) zu übertragen, welche wenigstens einen Identitätswert (ID1, ..., IDn), der wenigstens einen der Aktuatoren (A1, ..., An) identifiziert, und Steuerdaten enthalten, die eine Einstellung (1X, ..., nX) des wenigstens einen identifizierten Aktuators (A1, ..., An) angeben, wobei jeder einzelne der Aktuatoren (A1, ..., An) dazu eingerichtet ist, die Signale (S) über die Busverbindung (B) zu empfangen und basierend darauf eine entsprechende Einstellung so anzupassen, dass wenigstens eine angeforderte Funktion (FCN1, ..., FCNm) ausgeführt wird, **dadurch gekennzeichnet, dass** jeder einzelne der Aktuatoren (A1, ..., An) dazu eingerichtet ist, eine eingestellte Funktion auszuführen, und dass jeder einzelne der Aktuatoren (A1, ..., An) einem entsprechenden vorbestimmten Identitätswert (ID1, ..., IDn) zugeordnet ist, der den Aktuator innerhalb des Fahrzeugs eindeutig identifiziert, und wobei die Busverbindung (B) erweiterbar ist, so dass ein zweiter Aktuator (An) mit einem ersten mit dem Zentralknoten (CN) verbundenen Aktuator (A(n-1)) über die Busverbindung (B) verbunden werden kann, so dass nach dem Verbinden der zweite Aktuator (An) sich die Verbindung mit der Busverbindung (B) mit dem ersten Aktuator (A(n-1)) teilt und der zweite Aktuator (An) durch die Signale (S) gesteuert werden kann, die über den ersten Aktuator (A(n-1)) kommuniziert werden.

2. System nach Anspruch 1, bei dem der Zentralknoten (CN) eingerichtet ist zum:
Empfangen wenigstens eines Steuerbefehls, der die wenigstens eine angeforderte Funktion (FCN1, ..., FCNm) identifiziert und die Signale (S) basierend auf dem wenigstens einen Steuerbefehl erzeugt.

3. System nach Anspruch 2, bei dem der Zentralknoten (CN) dazu eingerichtet ist, eine logische Beschreibung einer Beziehung zwischen der wenigstens einen Funktion (FCN1, ..., FCNm) und den Signalen (S) zu implementieren, wobei die logische Beschreibung über eine Kommunikationsschnittstelle (INT) in dem Zentralknoten (CN) modifizierbar ist.

4. Verfahren zum Steuern von Funktionen in einem Kraftfahrzeug, das einen Zentralknoten (CN), einen Satz Aktuatoren (A1, ..., An), die dazu eingerichtet sind, von dem Zentralknoten (CN) zum Zwecke des Ausführens wenigstens einer Funktion in dem Fahrzeug gesteuert zu werden, und eine Busverbindung (B) aufweist, die den Zentralknoten (CN) kommunikationsfähig mit den Aktuatoren (A1, ..., An) verbindet, wobei das Verfahren umfasst:
Übertragen wenigstens eines Signals (S) von dem Zentralknoten (CN) auf der Busverbindung (B), wobei das Signal (S) wenigstens einen Identitätswert (ID1, ..., IDn), der wenigstens einen der Aktuatoren (A1, ..., An) identifiziert, und Steuerdaten enthält, die eine Einstellung (1X, ..., nX) des wenigstens einen identifizierten Aktuators (A1, ..., An) angeben,
Empfangen des wenigstens einen Signals (S) in wenigstens einem der Aktuatoren (A1, ..., An) über die Busverbindung (B), und, basierend darauf,
Anpassen in dem wenigstens einen der Aktuatoren (A1, ..., An) einer entsprechenden Einstellung solchermaßen, dass die wenigstens eine angeforderte Funktion (FCN1, ..., FCNm) ausgeführt wird, **dadurch gekennzeichnet, dass** jeder einzelne der Aktuatoren (A1, ..., An) dazu eingerichtet ist, eine eingestellte Funktion auszuführen, und dass jeder einzelne der Aktuatoren (A1, ..., An) einem entsprechenden vorbestimmten Identitätswert (ID1, ..., IDn) zugeordnet ist, der den Aktuator innerhalb des Fahrzeugs eindeutig identifiziert, und dass das Verfahren eine Erweiterung der Busverbindung (B) umfasst durch:
Verbinden eines zweiten Aktuators (An) mit einem ersten mit dem Zentralknoten (CN) verbundenem Aktuator (A(n-1)) über die Busverbindung (B) und, nach dem Verbinden,
Speichern von Daten in dem Zentralknoten (CN), die einen Identitätswert (IDn) für den zweiten Aktuator (An) mit der eingestellten Funktion des zweiten Aktuators (An) verknüpfen, und danach
Kommunizieren der Signale (S) zwischen dem Zentralknoten (CN) und dem zweiten Aktuator (An) über den ersten Aktuator (A(n-1)).

5. Verfahren nach Anspruch 4, wobei das Verfahren umfasst:
Verbinden eines Aktuators (A1, ..., A(n-1)) mit der Busverbindung (B) und, nach dem Verbinden,
Speichern von Daten in dem Zentralknoten (CN), die einen Identitätswert (ID1, ... ID(n-1)) mit der eingestellten Funktion des Aktuators (A1, ..., A(n-1)) verknüpfen, und danach
Kommunizieren der Signale (S) zwischen dem Zentralknoten (CN) und dem Aktuator (A1, ..., A(n-1)) über die Busverbindung (B).

6. Verfahren nach einem der Ansprüche 4 oder 5, wobei das Verfahren umfasst:
Empfangen wenigstens eines Steuerbefehls in dem Zentralknoten (CN), der die wenigstens eine angeforderte Funktion (FCN1, ..., FCNm) angibt, und, basierend auf dem wenigstens einen Steuerbefehl,
Erzeugen der Signale (S) in dem Zentralknoten (CN).

7. Verfahren nach Anspruch 6, bei dem der Zentralknoten (CN) dazu eingerichtet ist, eine logische Beschreibung einer Beziehung zwischen der wenigstens einen Funktion (FCN1, ..., FCNm) und den Signalen (S) zu implementieren, wobei das Verfahren ferner umfasst:
Modifizieren der logischen Beschreibung in dem Zentralknoten (CN) über eine Kommunikationsschnittstelle (INT).

8. Computerprogramm, das unmittelbar in den internen Speicher (M) eines Computers herunterladbar ist, wobei das Programm Software zum Durchführen der Schritte nach einem der Ansprüche 4 bis 7 umfasst, wenn das Programm auf dem Computer ausgeführt wird.

9. Computerlesbares Medium (M) mit einem darauf gespeicherten Programm, wobei das Programm dazu eingerichtet ist, einen Computer in die Lage zu versetzen, die Schritte nach einem der Ansprüche 4 bis 7 auszuführen.

## Revendications

1. Système pour commander des fonctions dans un véhicule à moteur, lequel système comprend :
un nœud central (CN), et
un ensemble d'actionneurs (A1, ..., An) configurés de manière à être commandés à partir du nœud central (CN) dans le but de réaliser au moins une fonction dans le véhicule, lesquels actionneurs (A1, ..., An) sont connectés de manière communicative au nœud central (CN) via une connexion bus (B), dans lequel le nœud central (CN) est configuré de manière à transmettre, sur la connexion bus (B), des signaux (S) contenant : au moins une donnée d'identité (ID1, ..., IDn) identifiant au moins un desdits actionneurs (A1, ..., An) et des données de commande indiquant un réglage (1X, ..., nX) dudit au moins un actionneur identifié (A1, ..., An), dans lequel chacun desdits actionneurs (A1, ..., An) est configuré de manière à recevoir, via la connexion bus (B), les signaux (S) et, sur la base de cela, à ajuster un réglage respectif de sorte qu'au moins une fonction ordonnée (FCN1, ..., FCNm) est réalisée, **caractérisé en ce que** chacun et chacun desdits actionneurs (A1, ..., An) est configuré de manière à réaliser une fonction réglée et chacun desdits actionneurs (A1, ..., An) est associé à une donnée d'identité prédéfinie respective (ID1, ..., IDn) qui identifie uniquement l'actionneur dans le véhicule, et dans lequel la connexion bus (B) est extensible, de sorte qu'un deuxième actionneur (An) peut être connecté à un premier actionneur (A(n-1)) connecté au nœud central (CN) via la connexion bus (B), de façon à ce que, après la connexion, le deuxième actionneur (An) partage la connexion à la connexion bus (B) avec le premier actionneur (A(n-1)) et le deuxième actionneur (An) peut être commandé au moyen desdits signaux (S) qui sont communiqués via ledit premier actionneur (A(n-1)).

2. Système selon la revendication 1, dans lequel le nœud central (CN) est configuré de manière à :
recevoir au moins un ordre de commande, qui identifie ladite au moins une fonction ordonnée (FCN1, ..., FCNm) et génère lesdits signaux (S) sur la base dudit au moins un ordre de commande.

3. Système selon la revendication 2, dans lequel le nœud central (CN) est configuré de manière à mettre en œuvre une description logique d'une relation entre ladite au moins une fonction (FCN1, ..., FCNm) et les signaux (S), laquelle description logique est modifiable via une interface de communication (INT) dans le nœud central (CN).

4. Procédé pour commander des fonctions dans un véhicule à moteur comprenant un nœud central (CN), un ensemble d'actionneurs (A1, ..., An) configurés de manière à être commandés à partir du nœud central (CN) dans le but de réaliser au moins une fonction dans le véhicule, et une connexion bus (B) qui connecte de manière communicative le nœud central (CN) auxdits actionneurs (A1, ..., An), lequel procédé comprend :
la transmission d'au moins un signal (S) à partir du nœud central (CN) sur la connexion bus (B), lequel signal (S) contient : au moins une donnée d'identité (ID1, ..., IDn) identifiant au moins un desdits actionneurs (A1, ..., An), et des données de commande indiquant un réglage (1X, ..., nX) dudit au moins un actionneur identifié (A1, ..., An),
la réception dudit au moins un signal (S) dans au moins un desdits actionneurs (A1, ..., An) via la connexion bus (B) et, sur la base de celle-ci,
le réglage dans ledit au moins un desdits actionneurs (A1, ..., An) d'un réglage respectif de sorte qu'au moins une fonction ordonnée (FCN1, ..., FCNm) est réalisée, **caractérisé en ce que** chacun desdits actionneurs (A1, ..., An) est configuré de manière à réaliser une fonction réglée, et chacun desdits actionneurs (A1, ..., An) est associé à une donnée d'identité prédéfinie respective (ID1, ..., IDn) qui identifie uniquement l'actionneur dans le véhicule, et le procédé comprenant l'extension de la connexion bus (B) au moyen de :
la connexion d'un deuxième actionneur (An) à un premier actionneur (A(n-1)) connecté au nœud central (CN) via la connexion bus (B) et, après la connexion,
le stockage, dans le nœud central (CN), de données qui lient une donnée d'identité (IDn) pour le deuxième actionneur (An) à la fonction de réglage du deuxième actionneur (An) et, ensuite, la communication desdits signaux (S) entre le nœud central (CN) et le deuxième actionneur (An) via le premier actionneur (A(n-1)).

5. Procédé selon la revendication 4, lequel procédé comprend : la connexion d'un actionneur (A1, ..., A(n-1)) à la connexion bus (B), et après la connexion
le stockage, dans le nœud central (CN), de données qui lient une donnée d'identité (ID1..., ID(n-1)) à la fonction de réglage de l'actionneur (Al..., A(n-1)) et, ensuite,
la communication desdits signaux (S) entre le nœud central (CN) et l'actionneur (Al..., A(n-1)) via la connexion bus (B).

6. Procédé selon l'une quelconque des revendications 4 ou 5, lequel procédé comprend :
la réception, dans le nœud central (CN), d'au moins un ordre de commande qui indique ladite au moins une fonction ordonnée (FCN1, ..., FCNm) et, sur la base dudit au moins un ordre de commande,
la génération desdits signaux (S) dans le nœud central (CN) .

7. Procédé selon la revendication 6, dans lequel procédé le nœud central (CN) est configuré de manière à mettre en œuvre une description logique d'une relation entre ladite au moins une fonction (FCN1, ..., FCNm) et les signaux (S), et lequel procédé comprend en outre :
la modification de la description logique via une interface de communication (INT) dans le nœud central (CN).

8. Programme informatique qui est directement téléchargeable sur la mémoire interne (M) d'un ordinateur, lequel programme comprend un logiciel pour réaliser les étapes selon l'une quelconque des revendications 4 à 7, lorsque ledit programme est exécuté sur un ordinateur.

9. Support lisible par ordinateur (M) avec un programme stocké sur celui-ci, dans lequel le programme est adapté de manière à permettre à un ordinateur de réaliser les étapes selon l'une quelconque des revendications 4 à 7.
